# DEMANDE DE BREVET EUROPEEN

(11) **EP 4 256 974 A1**
(43) Date de publication de la demande: **11.10.2023**
(21) Numéro de dépôt: 23305526.8
(22) Date de dépôt: 07.04.2023
(51) Int. Cl.: A23L 17/60, A23L 29/00, A23L 29/256

(54) **PROCÉDÉ DE PRÉPARATION D'UNE COMPOSITION ALIMENTAIRE, DESTINÉE A ÊTRE CUISINÉE, COMPRENANT DES ALGUES**

(30) Priorité: 08.04.2022 FR 2203245
(71) Demandeur: Mache & Co, 56000 Vannes (FR)
(72) Inventeur: Gestin, Tanguy, 56000 Vannes (FR)
(74) Mandataire: Fédit-Loriot

(57) **Abrégé**

L'invention concerne un procédé de préparation d'une composition alimentaire gélifiée, destinée à être cuisinée, comprenant des algues, dans lequel on prépare un mélange liquide en mélangeant un liquide aqueux, un alginate sous forme d'un sel alcalin monovalent hydrosoluble apte à réagir avec des ions calcium en milieu aqueux pour former de l'alginate de calcium, un composé source d'ions calcium, des algues en morceaux, et un agent régulateur de la disponibilité desdits ions calcium.

## Description

### Domaine de l'invention

La présente invention concerne un procédé de préparation d'une composition alimentaire, destinée à être cuisinée, comprenant des algues.

### Art antérieur

La consommation d'algues devient de plus en plus importante dans l'alimentation humaine. Les algues sont présentes en abondance et contiennent nombre de bons nutriments. Toutefois l'utilisation des algues comme aliment, et notamment à cuisiner, peut s'avérer difficile par des méthodes culinaires usuelles telles que préparer un aliment à la poêle ou intégrer des algues dans un plat.

La demande de brevet CN109588653A divulgue un procédé de fabrication d'une composition alimentaire alléguée de vertus thérapeutiques, comprenant des alginates et pouvant comprendre de la poudre d'algues, pour faire des nouilles froides (« cold noodles »). Cette composition ne comprend que des composants liquides et en poudre qui conduisent à des produits gélifiés sans texture.

### Résumé de l'invention

L'objectif de l'invention est de proposer des algues sous une forme dans laquelle l'algue est texturée pour lui apporter de la mâche c'est-à-dire du volume et de la texture, tout en conservant son goût et ses propriétés nutritionnelles. Un but de l'invention est de proposer un procédé de préparation adapté à une fabrication de produits contenant des algues, facilement commercialisables, cuisinables par des méthodes culinaires à la portée du plus grand nombre de personnes.

A cet effet, la présente invention propose un procédé de préparation d'une composition alimentaire gélifiée, destinée à être cuisinée, comprenant des algues, dans lequel on prépare un mélange liquide en mélangeant un liquide aqueux, un composé source d'ions calcium, un alginate sous forme d'un sel alcalin monovalent hydrosoluble apte à réagir avec des ions calcium en milieu aqueux pour former de l'alginate de calcium, des algues, et un agent régulateur de la disponibilité d'ions calcium dudit composé source d'ions calcium.

Selon l'invention lesdites algues sont en morceaux, et la plus grande dimension desdits morceaux d'algues est inférieure ou égale à environ 0,5 cm.

Dans ledit procédé selon l'invention, on mélange, pour 100 parts en poids dudit mélange liquide :
- entre 1 et 2 parts en poids dudit sel alcalin monovalent d'alginate hydrosoluble,
- entre 0,50 et 1,5 parts en poids dudit composé source d'ions calcium,
- entre 20 et 50 parts en poids d'algues en morceaux,
- entre 0,20 et 1,5 parts en poids dudit agent régulateur,
- et des parts en poids dudit liquide aqueux en quantité suffisante pour que la somme des parts soit égale à 100.

Les ions calcium dudit composé sont aptes à réagir avec ledit sel alcalin monovalent d'alginate hydrosoluble pour former de l'alginate de calcium. Ledit régulateur de la disponibilité d'ions calcium permet de contrôler la prise en gel du mélange liquide, en retardant la formation de l'alginate de calcium.

Le procédé de préparation selon l'invention comprend en outre l'étape :
- Couler le mélange liquide dans un moule, et laisser prendre en gel afin d'obtenir une composition gélifiée. De préférence, ledit agent régulateur de la disponibilité d'ions calcium dudit composé source d'ions calcium est ajouté juste avant de couler le mélange liquide, de préférence dans un délai inférieur ou égal à 5 minutes avant de couler le mélange liquide.

Le liquide aqueux peut être de l'eau potable, provenant par exemple du réseau d'eau public. Le liquide aqueux peut être aussi un bouillon aromatique à base d'eau. Le liquide aqueux peut être en partie un bouillon aromatique et en partie de l'eau potable seule, le bouillon et ladite eau pouvant être utilisés à différents moments du procédé de préparation.

Les composants sont tous choisis de qualité alimentaire dans la mesure où la composition est notamment destinée à l'alimentation humaine.

En particulier selon l'invention, on mélange, pour 100 parts en poids dudit mélange liquide :
- entre 1 et 2 parts en poids dudit sel alcalin monovalent d'alginate,
- entre 0,50 et 1 part en poids dudit composé source d'ions calcium,
- entre 20 et 50 parts en poids d'algues en morceaux,
- entre 0,50 et 1,5 parts en poids dudit agent régulateur,
- et des parts en poids dudit liquide aqueux en quantité suffisante pour que la somme des parts soit égale à 100.

De préférence, ledit sel alcalin monovalent d'alginate est l'alginate de sodium. Avantageusement, le procédé de préparation selon l'invention peut comprendre une étape : Découper ou prendre des algues en morceaux dont la plus grande dimension est inférieure ou égale à environ 0,5 cm. Cette taille des morceaux d'algues permet d'obtenir une meilleure cohésion et texture des produits finis.

Selon un mode de réalisation préféré de l'invention, le procédé de préparation est réalisé par gélification en milieu acide, autrement dit la composition gélifiée est obtenue par gélification interne en milieu acide. Ledit mode de réalisation préféré du procédé comprend les étapes suivantes :
- A) Mélanger ledit sel alcalin monovalent d'alginate hydrosoluble, un composé source d'ions calcium, insoluble dans l'eau à pH supérieur ou égal à 7 et hydrosoluble en milieu acide, un liquide aqueux, des algues en morceaux, le cas échéant préalablement blanchies, le pH dudit mélange étant supérieur ou égal à 7, puis
- B) Ajouter ledit agent régulateur dans ledit mélange aqueux comprenant les algues obtenu à l'étape A), ledit agent régulateur étant un acide alimentaire apte à abaisser progressivement le pH dudit mélange en dessous de 7 , puis couler immédiatement le mélange liquide obtenu dans un moule, et laisser prendre le gel afin d'obtenir une composition gélifiée.

L'acide alimentaire ajouté à l'étape B) est toujours ajouté juste avant de couler le mélange liquide. On entend plus particulièrement par « puis couler immédiatement », que le mélange est coulé rapidement, de préférence dans un délai d'au plus 5 minutes, après l'ajout de l'acide alimentaire. On peut ainsi dans un premier temps préparer le mélange sans l'acide alimentaire, puis dans un deuxième temps ajouter l'acide alimentaire et couler le mélange liquide obtenu dans un moule.

On entend par «composé insoluble dans l'eau à pH supérieur ou égal à 7 » que ledit composé est insoluble ou très faiblement soluble », de sorte que les ions calcium qu'il comprend ne sont pas libérés ou le sont en très faible quantité dans le milieu dans ces conditions de pH.

De préférence, ledit composé source d'ions calcium comprend au moins 50 % en poids de carbonate de calcium. Le carbonate de calcium est insoluble en milieu aqueux à pH supérieur ou égal à 7 et hydrosoluble en milieu acide. De préférence, ledit composé source d'ions calcium comprenant au moins 50 % en poids de carbonate de calcium est introduit dans une quantité telle que la quantité de carbonate de calcium soit comprise entre 0,50 et 1 part en poids, en particulier entre 0,50 et 0,75 part en poids, pour 100 parts en poids du mélange liquide.

De préférence, ledit composé source d'ions calcium comprenant au moins 50 % en poids de carbonate de calcium est du lithothamne ou du maërl. De préférence ledit composé source d'ions calcium est du lithothamne comprenant au moins 75 % en poids de carbonate de calcium, de préférence encore au moins 80 % en poids.

De préférence, ledit acide alimentaire est choisi parmi le citrate de calcium, l'acide citrique encapsulé, et de préférence la glucono-delta-lactone. De préférence on utilise la glucono-delta-lactone dans une quantité d'environ 1 part en poids pour 100 parts en poids dudit mélange liquide.

De préférence selon l'invention, le pH de gélification du mélange liquide pour obtenir une composition gélifiée prend des valeurs comprises entre 6,6 et 6, en particulier entre 6,5 et 6.

De préférence, le temps de prise en gel du mélange liquide une fois coulé dans un moule, peut durer entre 0,5 et 2 heures, afin d'obtenir une composition gélifiée. Avantageusement, le mélange liquide une fois coulé dans le moule, en cours de gélification, est de plus refroidi entre 3 à 5 degrés, afin de faciliter la prise du gel. Selon un mode particulier dudit procédé préféré de préparation, l'étape A/ comprend :
- Préparer un mélange à sec dudit sel alcalin monovalent d'alginate et dudit composé source d'ions calcium, puis disperser ledit mélange dans du liquide aqueux sous agitation jusqu'à dissolution dudit alginate, puis
- Ajouter lesdites algues en morceaux audit mélange aqueux, et mélanger. Selon un autre mode particulier dudit procédé préféré de préparation, l'étape A/ comprend :
- Préparer un mélange aqueux dudit sel alcalin monovalent d'alginate et dudit composé source d'ions calcium comme suit : disperser le composé source des ions calcium dans dudit liquide aqueux, puis y disperser ledit sel alcalin monovalent d'alginate de sodium jusqu'à sa dissolution, de préférence en chauffant vers 30-50°C, puis
- Ajouter lesdites algues en morceaux audit mélange aqueux obtenu, et mélanger.

Le procédé de préparation selon l'invention comprend en outre l'étape :
- Conditionner ladite composition une fois gélifiée en éléments à cuisiner.

En particulier, ledit procédé préféré de préparation peut comprendre en outre une étape, après l'étape B) :
- Conditionner ladite composition gélifiée en éléments à cuisiner.

On entend par « éléments à cuisiner » des éléments pouvant avoir diverses formes, par exemple : des dés, tranches, allumettes, pavés, bâtonnets (en forme de frites), lamelles.

On entend par « conditionner » que la composition une fois gélifiée peut par exemple être découpée en éléments à cuisiner, et/ou que les éléments peuvent être emballés, puis stérilisés ou surgelés.

Alternativement, le mélange liquide obtenu peut être coulé dans un moule à compartiments formant directement lesdits éléments (gélifiés) à la forme voulue, dans ce cas une découpe peut s'avérer ne pas être nécessaire, les éléments à cuisiner seront directement démoulés.

Ces éléments peuvent par la suite être cuisinés selon des méthodes culinaires usuelles, comme par exemple les rissoler dans une poêle en présence d'un peu de matière grasse ou en friture.

Le procédé de préparation d'une composition gélifiée selon l'invention conduit à obtenir des algues dans une matrice texturante thermorésistante et utilisable en éléments à cuisiner sous plusieurs formes, et pouvant contenir plus de 95% de matière sèche d'origine algale.

L'invention a aussi pour objet un élément comprenant des algues, apte à être cuisiné, obtenu à partir d'une composition alimentaire gélifiée, ladite composition comprenant des algues en morceaux, et dont la plus grande dimension est inférieure ou égale à environ 0,5 cm, dispersées au sein d'une matrice gélifiée comprenant de l'alginate de calcium et un liquide aqueux.

En particulier, ledit élément comprenant des algues, apte à être cuisiné, est obtenu à partir d'une composition gélifiée comprenant au moins 20 parts en poids d'algues pour 100 parts en poids de ladite composition gélifiée, en particulier entre 20 et 50 parts en poids d'algues pour 100 parts en poids de ladite composition gélifiée.

De préférence, ledit élément comprenant des algues, apte à être cuisiné, est obtenu à partir d'une composition gélifiée préparée selon le procédé de préparation décrit précédemment. Plus particulièrement, ladite composition gélifiée est obtenue par gélification interne en milieu acide.

### Description détaillée de l'invention :

D'autres particularités et avantages de l'invention ressortiront à la lecture de la description faite ci-après de modes de réalisation particuliers de l'invention, donnés à titre indicatif mais non limitatif.

Tous les composants qui vont être cités dans les exemples qui suivent sont de qualité alimentaire, l'eau étant de l'eau potable.

Exemple 1 : Préparation d'une composition alimentaire, destinée à être cuisinée, à base d'algues selon l'invention, par gélification interne en milieu acide. La gélification interne en milieu acide selon l'invention consiste à mélanger un sel d'alginate soluble dans l'eau, avec un composé source d'ions calcium insoluble dans l'eau à pH supérieur ou égale à 7, mais soluble à pH acide, puis déclencher la gélification par abaissement du pH avec un acide alimentaire libérant progressivement son acidité. On prépare une composition alimentaire, destinée à être cuisinée, à base d'algues en utilisant l'alginate de sodium, connu comme additif alimentaire, qui est soluble dans l'eau. Il est extrait d'algues brunes, constituée d'unités glucidiques formant une chaîne polymère. Comme composé source d'ions calcium, on utilise le carbonate de calcium, sel insoluble en milieu aqueux à pH neutre ou supérieur, mais hydrosoluble en milieu acide.

Afin de déclencher la libération d'ions calcium depuis le carbonate de calcium, on utilise comme acidifiant progressif la glucono-delta-lactone (GDL). Après dissolution en milieu aqueux, la GDL s'hydrolyse lentement en acide gluconique. Le milieu devenant acide, le carbonate de calcium se solubilise et libère des ions calcium (Ca²⁺) qui vont être disponibles pour s'associer à l'alginate pour former de l'alginate de calcium, macromolécule de formule (C₆H₇Ca_{1/2} O₆)n , et conduire ainsi à la gélification de la composition algale.

La composition est préparée suivant le procédé par gélification interne en milieu acide, de la manière suivante:
Etape A) :
   - Préparer 290 g d'eau potable,
   - Préparer un mélange aqueux d'alginate de sodium et de carbonate de calcium comme suit : Disperser 2,30 g de carbonate de calcium sous agitation pendant 1 minute dans l'eau, puis y disperser 6 g d'alginate de sodium sous agitation, en chauffant à 40°C jusqu'à dissolution de l'alginate, puis,
   - Mélanger 97 g d'algues « Saccharina latissima » prébroyées et préblanchies, au mélange aqueux alginate de sodium/carbonate de calcium, à froid, sous agitation vigoureuse, puis
Etape B) :
   - Dissoudre 4 g de GDL sous agitation pendant 0,5 minute dans ce mélange aqueux comprenant les algues, puis immédiatement
   - Couler le mélange liquide obtenu dans un moule et laisser reposer à 4°C pour favoriser la prise en gel (30 minutes minimum).

Les parts des composants mis en mélange exprimées en poids pour 100 parts de la composition totale sont les suivantes :
- 1,5 parts d'alginate de sodium,
- 0,576 parts de carbonate de calcium,
- 24,29 parts d'algues,
- 1 part de GDL,
- 72,634 parts d'eau.

Par la suite, on découpe la composition gélifiée obtenue en dés à cuisiner.

On obtient ainsi des dés avec des algues au sein d'une matrice solidifiée.

Les dés peuvent être ensuite conditionnés dans un emballage pour être stérilisés ou surgelés, puis commercialisés.

Ces produits peuvent être cuisinés par des méthodes culinaires usuelles.

Exemple 2 : Préparation d'une composition alimentaire, destinée à être cuisinée, à base d'algues selon l'invention, par gélification interne en milieu acide. On utilise les mêmes composants et système de gélification par voie acide que ceux décrits à l'exemple 1, mais comme composé source d'ions calcium, on utilise du lithothamne qui comprend du carbonate de calcium. On utilise ainsi un lithothamne comprenant 80% en poids de carbonate de calcium, soit environ 32% de calcium, insoluble en milieu aqueux à pH neutre ou plus (pH ≥ 7), mais soluble en milieu acide, apte à fournir des ions calcium en milieu acide. Le lithothamne est un extrait d'algues rouges produisant des concrétions calcaires. Le lithothamne est couramment utilisé dans l'alimentation humaine pour ses apports en calcium. Afin de déclencher la libération d'ions calcium depuis le carbonate de calcium que comprend principalement le lithothamne, on utilise aussi comme acidifiant alimentaire progressif la glucono-delta-lactone (GDL).

La composition est préparée de la manière suivante, les parts des composants étant exprimées en poids pour 100 parts de la composition totale :
Etape A) :
   - Préparer un mélange de 1,5 parts d'alginate de sodium et de 0,7 part de lithothamne (soit 0,56 part de carbonate de calcium) en dispersant à sec le lithothamne avec l'alginate, pour obtenir ensuite une meilleure solubilisation de l'alginate de sodium dans l'eau.
   - Prendre 66,80 parts d'eau potable et y disperser ledit mélange alginate de sodium /lithothamne, sous agitation intense avec un vortex jusqu'à dissolution de l'alginate de sodium, soit pendant environ 30 minutes.
   - Ajouter 30 parts d'algues en morceaux ayant une plus grande dimension d'environ 0,5 cm, préalablement blanchies, audit mélange aqueux, et mélanger vigoureusement les composants.
Etape B) :
   - Disperser 1 part de glucono-delta-lactone dans ledit mélange aqueux comprenant les algues, et mélanger les composants sous agitation intense avec un vortex pendant 1 minute, puis immédiatement couler la composition obtenue dans un moule.
   Il est possible de stocker le mélange coulé à 4°C pour favoriser la prise en gel (30 minutes minimum).
Etape C) : Découper la composition moulée une fois gélifiée, en dés à cuisiner. On obtient ainsi des dés avec des algues au sein d'une matrice gélifiée comprenant de l'alginate de calcium et de l'eau.

Les dés peuvent être ensuite conditionnés dans un emballage pour être stérilisés ou surgelés, puis commercialisés. Ces produits peuvent être cuisinés par des méthodes culinaires usuelles.

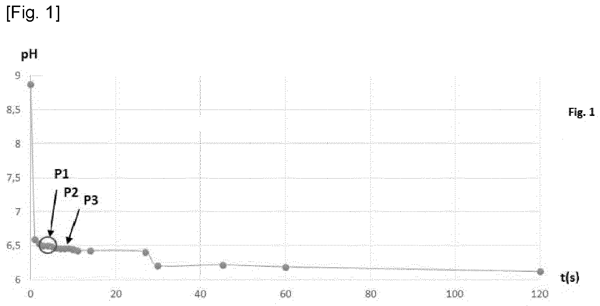

[Fig. 1] illustre le suivi du pH de la composition en fonction du temps t, lorsqu'au mélange obtenu à l'étape A, on ajoute la GDL à l'étape B, soit à partir de l'instant où on ajoute la GLD (t=0) et pendant la phase de gélification.

Avant l'ajout, le pH est supérieur à 7, puis dès l'ajout de la GDL, le pH chute rapidement à 6,49 puis descend progressivement. Le gel commence à se former à 7 minutes de l'ajout du GDL avec un pH = 6,46. P1 : à pH=6,46, on observe le début de formation de gel, le gel est très mou, P2 : à pH=6,45, on observe que le gel devient mou souple, P3 : à pH=6,43, on observe que le gel devient ferme visqueux. On observe ainsi que la prise du gel commence vers un pH légèrement inférieur à 6,5 et évolue pour se stabiliser à un pH de 6,12 au bout de 2 heures. On estime alors que la composition est gélifiée et peut être conditionnée. Le pH final du produit est à 6,12, ce qui reste relativement élevé de manière surprenante, et ce qui est intéressant pour une composition destinée à l'alimentation.

Une évaluation de la texture du produit obtenu a été conduite par mesure de la dureté des dés obtenus (non cuisinés). Le mode de compression a été appliqué deux fois pour déterminer la dureté des gels avec une sonde cylindrique P/0.5R. Les vitesses de pré-test, de test et de post-test avec un déclencheur automatique de 5 g étaient respectivement de 1,0, 0,5 et 1,0 mm/s. Le degré de compression était de 30% et la vitesse d'acquisition des données était de 200 pps (pulse par seconde). Il a été possible de déterminer la force de rupture à travers le pic de la courbe obtenue. Les dés ont une force de rupture moyenne de 44,8 ±5 g. La dureté correspond à un aliment ayant une mâche correcte, telle que recherchée.

A l'exemple 1 comme à l'exemple 2, lors de la cuisson des dés obtenus, en les passant à la poêle dans de la matière grasse, le gel tenant les algues se rétracte avec évacuation de l'eau. Les produits se tiennent bien, avec du volume et de la texture, ce qui donne de la mâche lorsqu'on les mange. Une réaction de Maillard s'opère en surface des éléments pour un rendu croustillant.

Le produit cuisiné, va perdre, pour un rendu optimal, 40 à 60% de sa masse en eau, évacuée lors de la cuisson.

Les produits obtenus sont très cohésifs, et ils le restent aussi après avoir été cuisinés. Les morceaux d'algues d'un dé restent assemblés même après cuisson.

Les compositions ainsi préparées selon les exemples 1 ou 2 selon l'invention, conduisent à obtenir des algues en morceaux dans une matrice texturante thermorésistante et utilisables sous plusieurs formes d'éléments à cuisiner (dés, tranches, allumettes, pavés, bâtonnets (en forme de frites), etc.).

### ESSAIS COMPARATIFS :

1/ Essais comparatifs relatifs à la teneur en alginate de sodium : Des essais comparatifs utilisant le même procédé de préparation et avec les mêmes composants qu'à l'exemple 1, mais en faisant varier la teneur en alginate de sodium, ont montré que la quantité d'alginate de sodium introduit dans le mélange doit être d'au moins 1 part en poids pour 100 parts en poids de composition aqueuse (pas encore gélifiée), et de préférence de l'ordre de 1,5 parts, pour obtenir une composition gélifiée suffisamment ferme.
2/ Essais comparatifs relatifs à la taille des morceaux d'algues : Des essais comparatifs utilisant le même procédé de préparation et avec les mêmes composants qu'à l'exemple 1, mais en faisant varier la taille des morceaux d'algues, ont montré que si les morceaux d'algues ont une taille supérieure à 0,5 cm, on observe que la cohésion et la texture des produits obtenus est moins satisfaisante.
3/ Essai comparatif de la préparation d'une composition alimentaire, destinée à être cuisinée, à base d'algues par gélification interne en milieu neutre. La gélification à pH neutre consiste à mélanger à un alginate soluble, un séquestrant du calcium, puis d'ajouter une source de calcium moyennement soluble comme le sulfate de calcium. La source de calcium libérant progressivement des ions calcium (Ca²⁺), est repartie dans la masse. Pour éviter une gélification trop rapide et permettre le mélange des composants et de pouvoir couler le mélange, on ajoute cet agent séquestrant sous forme d'un sel formant avec les ions calcium (Ca²⁺) libérés progressivement, un composé plus stable que l'alginate de calcium. Ainsi ledit composé se formera en premier et devrait protéger jusqu'à son épuisement l'alginate de l'action du calcium. Comme agent séquestrant d'ions calcium, on utilise le pyrophosphate de sodium. La source de calcium libérant progressivement des ions calcium (Ca²⁺) est répartie dans la masse de la composition algale. Quand le phosphate de sodium a été consommé par les ions calcium, les ions calcium qui restent, devraient théoriquement s'associer à l'alginate pour former de l'alginate de calcium et conduire à la gélification de la composition algale. Comme source de carbonate de calcium, faiblement soluble, on utilise le sulfate de calcium.

La composition alimentaire, destinée à être cuisinée, à base d'algues est préparée en utilisant l'alginate de sodium, soluble dans l'eau. La composition est préparée suivant ce procédé par gélification interne en milieu neutre, de la manière suivante, les parts des composants étant exprimées en poids pour 100 parts de la composition totale : Etape 1 : Dissoudre 0,25 part de pyrophosphate de sodium dans de l'eau, puis Etape 2 : Disperser et dissoudre 1 part d'alginate de sodium dans la solution de pyrophosphate de sodium, Etape 3 : Préparer une suspension aqueuse de sulfate de calcium : 1,5 parts de sulfate de calcium, Etape 4 : Ajouter sous agitation 30 parts d'algues en purée (préparée à chaud eau + algues broyées) au mélange aqueux alginate/ pyrophosphate de l'étape 2, puis

Etape 5 : Ajouter la suspension aqueuse de sulfate de calcium au mélange de l'étape 4 sous agitation pendant 1 minute, puis Etape 6 : Couler la composition obtenue dans un moule jusqu'à obtention de la prise en gel, en laissant reposer au froid à 4°C (pendant 30 minutes minimum ). Ce mode particulier de préparation de gélification par voie neutre conduit à l'obtention d'une composition dont la cohésion est de qualité nettement inférieure à celle obtenue par le mode de gélification par voie acide.

## Revendications

1. Procédé de préparation d'une composition alimentaire gélifiée, destinée à être cuisinée, comprenant des algues, dans lequel on prépare un mélange liquide en mélangeant un liquide aqueux, un composé source d'ions calcium, un alginate sous forme d'un sel alcalin monovalent hydrosoluble apte à réagir avec des ions calcium en milieu aqueux pour former de l'alginate de calcium, des algues et un agent régulateur de la disponibilité des ions calcium dudit composé source d'ions calcium, lesdites algues étant en morceaux et la plus grande dimension desdits morceaux étant inférieure ou égale à environ 0,5 cm, et dans lequel on mélange, pour 100 parts en poids dudit mélange liquide:
- entre 1 et 2 parts en poids dudit sel alcalin monovalent d'alginate hydrosoluble,
- entre 0,50 et 1,5 parts en poids du composé source d'ions calcium,
- entre 20 et 50 parts en poids d'algues en morceaux,
- entre 0,20 et 1,5 parts en poids dudit agent régulateur, et
- des parts en poids dudit liquide aqueux de sorte que la somme de toutes lesdites parts en poids soit égale à 100.

2. Procédé de préparation selon la revendication 1, comprenant une étape :
- Couler le mélange liquide dans un moule, et laisser prendre en gel afin d'obtenir une composition gélifiée.

3. Procédé de préparation selon l'une des revendications 1 à 2, dans lequel ledit sel alcalin monovalent d'alginate est l'alginate de sodium.

4. Procédé de préparation selon l'une quelconque des revendications 1 à 3, comprenant une étape préalable :
- Découper ou prendre des algues en morceaux dont la plus grande dimension est inférieure ou égale à environ 0,5 cm.

5. Procédé de préparation selon l'une quelconque des revendications 1 à 4, comprenant les étapes :
- A) Mélanger ledit sel alcalin monovalent d'alginate hydrosoluble, un composé source d'ions calcium, insoluble dans l'eau à pH supérieur ou égal à 7 et hydrosoluble en milieu acide, un liquide aqueux, des algues en morceaux, le cas échéant préalablement blanchies, le pH du mélange étant supérieur ou égal à 7, puis
- B) Ajouter ledit agent régulateur dans ledit mélange comprenant les algues obtenu à l'étape A), ledit agent régulateur étant un acide alimentaire apte à abaisser progressivement le pH dudit mélange en dessous de 7 , puis couler immédiatement le mélange liquide obtenu dans un moule, et laisser prendre en gel afin d'obtenir une composition gélifiée.

6. Procédé de préparation selon la revendication 5, dans lequel le pH de gélification du mélange liquide pour obtenir une composition gélifiée prend des valeurs comprises entre 6,6 et 6, en particulier entre 6,5 et 6.

7. Procédé de préparation selon la revendication 5 ou 6, dans lequel l'étape A/ comprend :
- Préparer un mélange à sec dudit sel alcalin monovalent d'alginate et dudit composé source d'ions calcium, puis disperser ledit mélange dans du liquide aqueux sous agitation jusqu'à dissolution dudit alginate, puis
- Ajouter lesdites algues en morceaux audit mélange aqueux, et mélanger.

8. Procédé de préparation selon la revendication 5 ou 6, dans lequel l'étape A/ comprend:
- Préparer un mélange aqueux dudit sel alcalin monovalent d'alginate et dudit composé source d'ions calcium comme suit : disperser le composé source des ions calcium dans dudit liquide aqueux, puis y disperser le sel alcalin monovalent d'alginate de sodium jusqu'à sa dissolution, de préférence en chauffant vers 30-50°C, puis
- Ajouter lesdites algues en morceaux audit mélange aqueux obtenu, et mélanger.

9. Procédé de préparation selon l'une quelconque des revendications 1 à 8, dans lequel ledit composé source des ions calcium comprend au moins 50% en poids de carbonate de calcium, de préférence au moins 75 % en poids de carbonate de calcium, et de préférence ledit composé source d'ions calcium est ajouté en quantité de sorte que la quantité en poids dudit carbonate de calcium est comprise entre 0,5 et 1 part, pour 100 parts en poids dudit mélange liquide.

10. Procédé de préparation selon la revendication 9, dans lequel ledit composé source des ions calcium est un lithothamne comprenant au moins 75 % en poids de carbonate de calcium, de préférence encore au moins 80 % en poids, et de préférence il est ajouté au mélange dans une quantité telle que la quantité en poids de carbonate de calcium soit comprise entre 0,5 et 1 part en poids, pour 100 parts en poids du mélange liquide.

11. Procédé de préparation selon l'une quelconque des revendications 5 à 10, dans lequel ledit acide alimentaire est choisi parmi le citrate de calcium, l'acide citrique encapsulé, et de préférence la glucono-delta-lactone.

12. Procédé de préparation selon la revendication 11, dans lequel la quantité en poids de glucono-delta-lactone est de 1 part en poids pour 100 parts en poids dudit mélange liquide.

13. Procédé de préparation selon l'une quelconque des revendications 1 à 12, comprenant en outre l'étape :
- Conditionner ladite composition une fois gélifiée en éléments à cuisiner.

14. Elément comprenant des algues, apte à être cuisiné, obtenu à partir d'une composition alimentaire gélifiée, ladite composition comprenant des algues en morceaux et dont la plus grande dimension est inférieure ou égale à environ 0,5 cm, dispersées au sein d'une matrice gélifiée comprenant de l'alginate de calcium et un liquide aqueux, et ladite composition comprenant entre 20 et 50 parts en poids d'algues pour 100 parts en poids de ladite composition gélifiée.

15. Elément comprenant des algues selon la revendication 14, obtenu à partir d'une composition alimentaire gélifiée obtenue selon le procédé de préparation suivant l'une des revendications 1 à 13.
